Europäisches Patentamt

European Patent Office

Office européen des brevets

(11) Publication number: **0 094 225**
**A2**

# EUROPEAN PATENT APPLICATION

(21) Application number: **83302581.0**

(22) Date of filing: **06.05.83**

(51) Int. Cl.³: **B 65 G 57/24**.

(30) Priority: **07.05.82 GB 8213288**

(43) Date of publication of application: **16.11.83**
**Bulletin 83/46**

(84) Designated Contracting States: **AT BE CH DE FR GB IT LI LU NL SE**

(71) Applicant: **Scottish & Newcastle Breweries plc, Abbey Brewery Holyrood Road, Edinburgh EH8 8YS (GB)**

(72) Inventor: **Steeples, Alexander G., 48 Nantwich Drive, Edinburgh EH7 6RA (GB)**

(74) Representative: **Pacitti, Pierpaolo A.M.E. et al, Ian G. Murgitroyd and Company 49 Bath Street, Glasgow G2 2DL (GB)**

(54) **Mechanical handling apparatus.**

(57) There is described mechanical handling apparatus for palletising beer kegs. The apparatus has a first feed mechanism for feeding beer kegs to a palletising station and a second feed mechanism for feeding empty pallets to said palletising station. The movement of said first feed mechanism and said second feed mechanism is synchronised so that the objects are correctly loaded onto said pallets.

The apparatus includes means for correctly orienting the beer kegs prior to their being fed to the palletising station. Also, stacking means for forming a stack of filled pallets is provided.

TITLE

"Mechanical Handling Apparatus"

BACKGROUND OF THE INVENTION

This invention relates to mechanical handling apparatus particularly but not exclusively for use in handling and palletising beer kegs.

In the handling of beer kegs and similar objects it is convenient to mount a number of the objects on a pallet so as to facilitate the handling and storage thereof. Pallets are readily stackable and easily handled by fork-lift trucks and the like. the disadvantages of the use of pallets lies in the initial loading of the objects on to the pallets and in stacking them in optimum numbers to avoid excessive handling of individual pallets.

A particular problem exists in the palletising of beer kegs onto saddle pallets. In this case the kegs have to be stored onto the pallets with the axes of the kegs horizontal, the pallets being provided with saddle portions to receive the horizontal kegs.

## SUMMARY OF THE INVENTION

An object of the present invention is to obviate or mitigate the aforementioned disadvantages.

According to the present invention there is provided mechanical handling apparatus for palletising objects comprising:

a first feed mechanism for objects to be palletised;

a second feed mechanism for empty pallets;and

a palletising station where said objects are loaded onto said empty pallets;

wherein the movement of said first feed mechanism and said second feed mechanism is synchronised so that the objects are correctly loaded onto said pallets.

## BRIEF DESCRIPTION OF THE DRAWINGS

Embodiments of the invention will now be described, by way of example, with reference to the accompanying drawings, in which:-

Fig. 1 is a side view in elevation of mechanical handling apparatus according to the present invention;

Fig. 2 is a top plan view of the mechanical handling apparatus of Fig. 1;

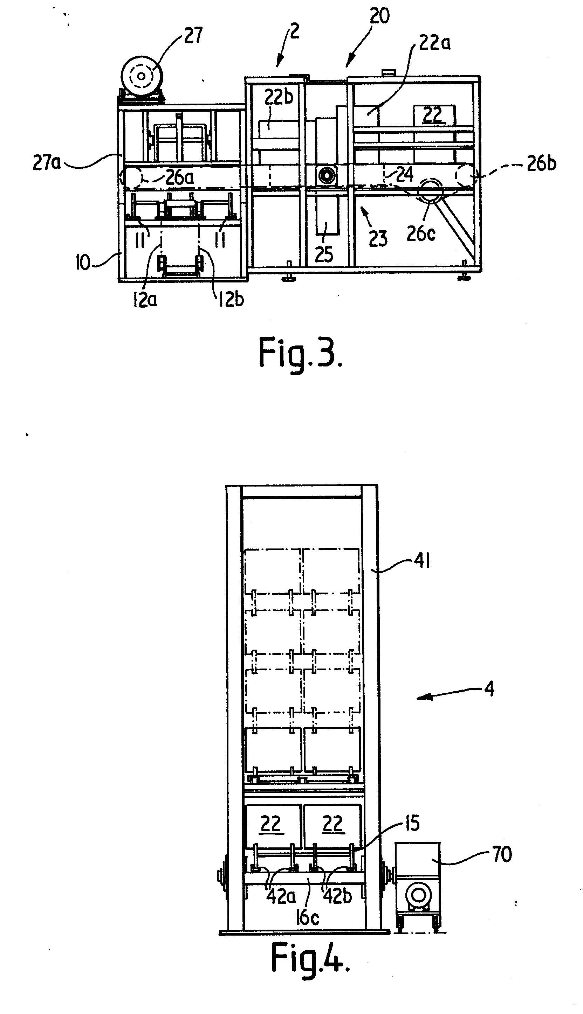

Fig. 3 is an end view, in elevation, of the apparatus of Fig. 1 taken along the line III-III of Fig. 1;

Fig. 4 is an end view, in elevation, of the apparatus of Fig. 1, taken along the line IV-IV of Fig. 1; and

Fig. 5 is a schematic plan view of the apparatus of Fig. 1 showing control sensors which enable synchronisation and provide safeguards to the operators.

## DETAILED DESCRIPTION OF PREFERRED EMBODIMENTS

Referring now to the drawings, mechanical handling apparatus according to the invention is in the form of a beer keg palletiser. The apparatus comprises a pallet feed section shown generally at 1, a keg feed section shown generally at 2, a palletiser section shown generally at 3 and a pallet stacking section shown generally at 4.

The pallet feed section 1 comprises a support frame 10 carrying pallet slides 11 along which saddle pallets 15 are moved. To this end, the frame 10 has a pallet conveyor 12 in the form of a pair of continuous conveyor chains 12a, 12b having a plurality of spaced pusher members 13. The pusher members serve to engage respective end faces 15a of the pallets 15 and the spacing between the pusher members 13 is greater than the length of the pallets 15. The chains 12a, 12b pass around rollers 16a, 16b and 16c, the roller 16b being provided with conventional tensioning means and the roller 16c being connected to pallet feed conveyor drive means 19 in the form of an electric motor and gear-box.

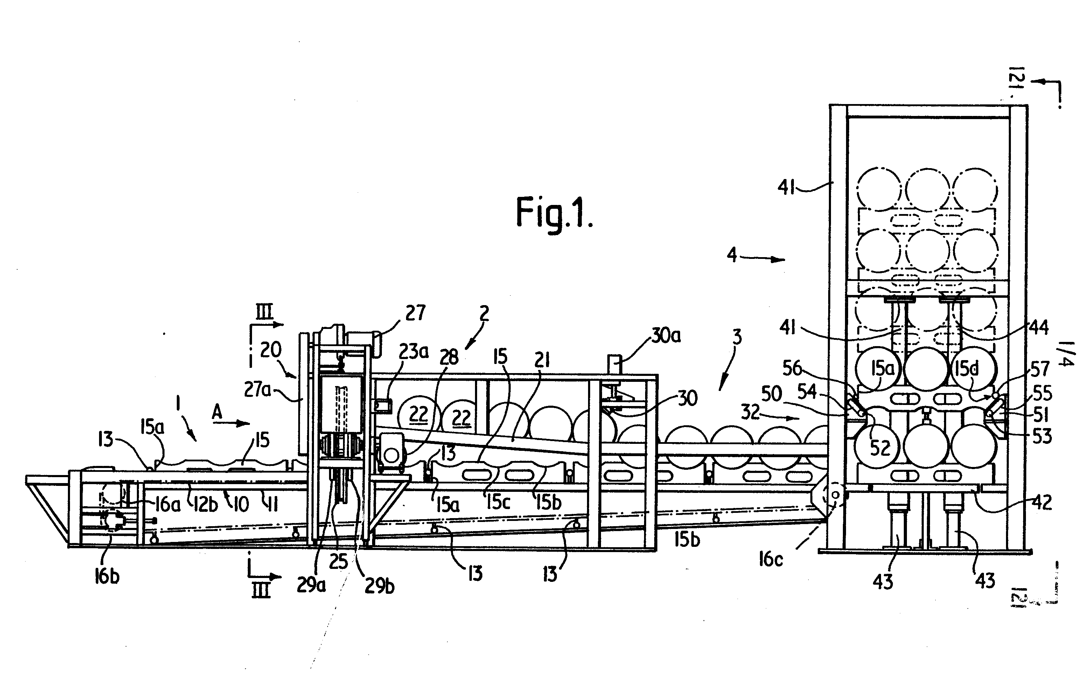

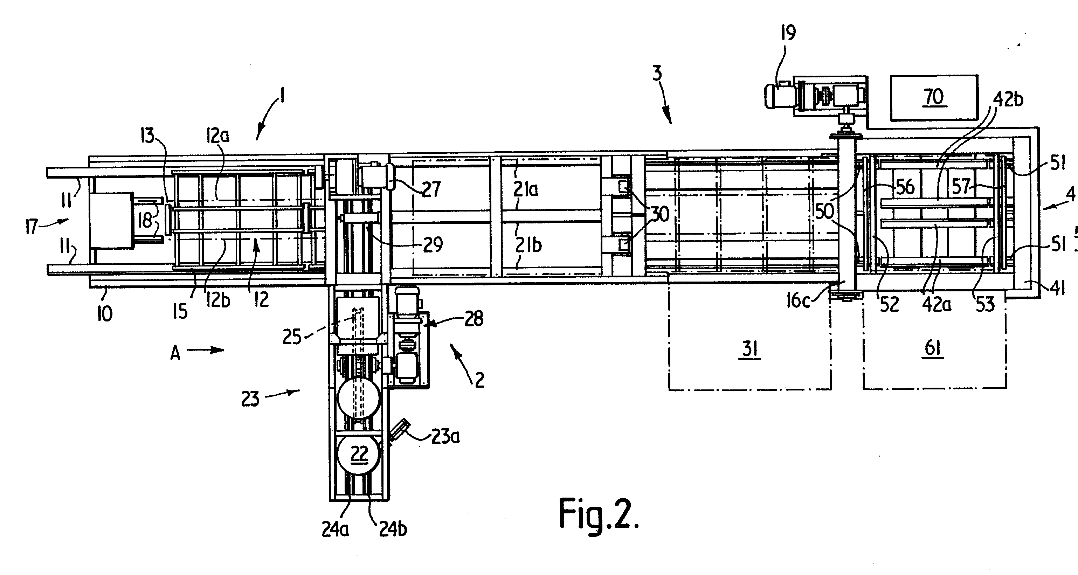

Pallets 15 are loaded manually or otherwise on the pallet feed conveyor 12 at its input end 17 and are pushed forward by hydraulic rams 18 until the end face 15a of the pallet is beyond the centre line of the pulley 16a whereupon respective pusher members 13 on the chains 12a, 12b engage the face 15a and continue to push the pallet 15 in the direction of arrow A in Figs. 1 and 2 towards the palletiser section 3 of the apparatus in order to receive kegs in a manner to be described hereinafter.

The keg feed section 2 generally overlies the pallet feed section 1 and comprises a keg turner and cross feed unit 20 which supplies a pair of kegs in a side by side relationship to a keg rolling grid 21 which comprises two respective pairs of guides 21a, 21b.

Filled beer kegs 22 are fed from conventional keg filling plant with the keg axes vertical as shown by the keg marked 22a. As the kegs are to be stacked onto the saddle pallets 15 fed by the pallet feed section 1, it is required that the axes of the kegs are horizontal. · To this end, the kegs first pass through a keg turner mechanism 23 through which the kegs are fed by means of a cross feed conveyor 24 which comprises a pair of chains 24a, 24b. The keg turner mechanism 23 comprises a rotating cross-frame 25 which receives a "vertical" keg 22a and rotates through ninety degrees to discharge a "horizontal" keg 22b which is fed by the cross feed conveyor 24 to the keg rolling grid 21. The chains 24a, 24b of the cross feed conveyor 24 pass around rollers 26a, 26b and 26c and are driven by an electric motor. 27 through a drive belt 27a conveyor 24. The kegs 22 are fed to the turner mechanism 23 under the control of a keg stop 23a which ensures that the cross-frame 25 is in the correct position to receive a "vertical" keg. The keg turner mechanism 23 is driven by an electric motor and gearbox unit 28.

The kegs 22 are discharged from the cross-feed conveyor 24 onto the keg rolling grid 21 by means of two mechanisms. The first comprises a lifting cylinder mounted between the chains 24a, 24b which lifts the kegs 22 clear of the chains. As the kegs are lifted, a second mechanism comprising a pusher cylinder 29 pushes the kegs sideways onto the grid 21. this arrangement prevents excessive wear on the chains 24a, 24b of the conveyor 24.

The beer kegs 22 then roll down the inclined plane of the keg rolling grid 21 and are retained on the grid 21 close to the bottom of the plane by a feeding device in the form of a pair of hydraulic keg stops. The keg stops each comprise a hydraulically operated releasable brake 30 which stops the keg 22 at the bottom of the grid 21 until a pallet 15 is in position to accept the kegs, as shown in Fig. 1. The brake 30 is then released by a hydraulic cylinder 30a and the kegs 22 drop into the saddled portion 15b of the pallet 15. The pallet is then moved forward by the pallet feed conveyor 12 so that the next saddle portion 15c is in position to receive the next keg 22 which is then released by the brake 30. Clearly, the pallet feed conveyor 12 is synchronised with the release of the brake 30 so as to ensure that the kegs 22 are deposited in the saddles of the pallets 15. Thus, at the palletiser section 3, "horizontal" kegs 22 are fed into respective saddle portions of the pallets 15.

At this stage, the filled pallets 15 may be removed singly at a "singles" removal station 31. Alternatively, the pallets may proceed to the pallet stacking section 4.

The pallet stacking section 4 comprises a vertically extending frame 41 fixed at the output end 32 of the palletiser section 3.

When a pallet 15 has been filled, it is discharged from the palletiser section 3 by an appropriate pusher member 13 on to a vertically movable lifting table 42 in the form of two pairs 42a, 42b of opposed guides which receive the pallets 15. The movement of the lifting table 42 is synchronised to the movement of pallets 15 along the pallet feed conveyor 12

such that the lifting table 42 is on the same plane as the upper run of the pallet conveyor 12 when filled pallets 15 are discharged by the pusher members 13 from the palletiser section 3.

Hydraulic piston and cylinder units 43 are provided to raise and lower the table 42 along tubular guides 44 to effect stacking of the pallets 15. Stacking is effected by an indexing mechanism which comprises two pairs of brackets 50, 51 fixed on respective legs of the frame 41. Each pair of brackets carries a movable pallet support bar 52, 53 the ends of which are received in angled slots 54, 55 in the brackets 50, 51.

The stroke of the piston and cylinder units 43 is such that as the table 42 lifts a pallet 15 past the support bars 52, 53, the support bars 52, 53 are pushed upwardly and outwardly until they are clear of the pallet edges 15a, 15d of the pallet. At this point, the support bars 52, 53 drop through gravity along the slots 54, 55 to the position shown in Fig. 1 and the piston and cylinder units 43 allow the table 42 to drop, the pallet 15 being retained in the raised position by the support bars 52, 53.

A pair of pallet centralising bars 56, 57 are located adjacent and above the brackets 50, 51 and serve to ensure the pallet 15 is supported accurately by the support bars 52, 53.

When the table 42 is lowered, another filled pallet 15 is placed thereon and the piston and cylinder unit 43 again raised the table 42 so as to form a stack of filled pallets in the frame 41. When a predetermined number of pallets have been stacked a forklift truck lifts the stack of pallets from the frame 41 at a "stacked" removal station 61 and transfers them to a storage area.

Hydraulic power from the piston and cylinder units 43, and the other hydraulically powered elements of the apparatus is derived from a hydraulic power pack 70.

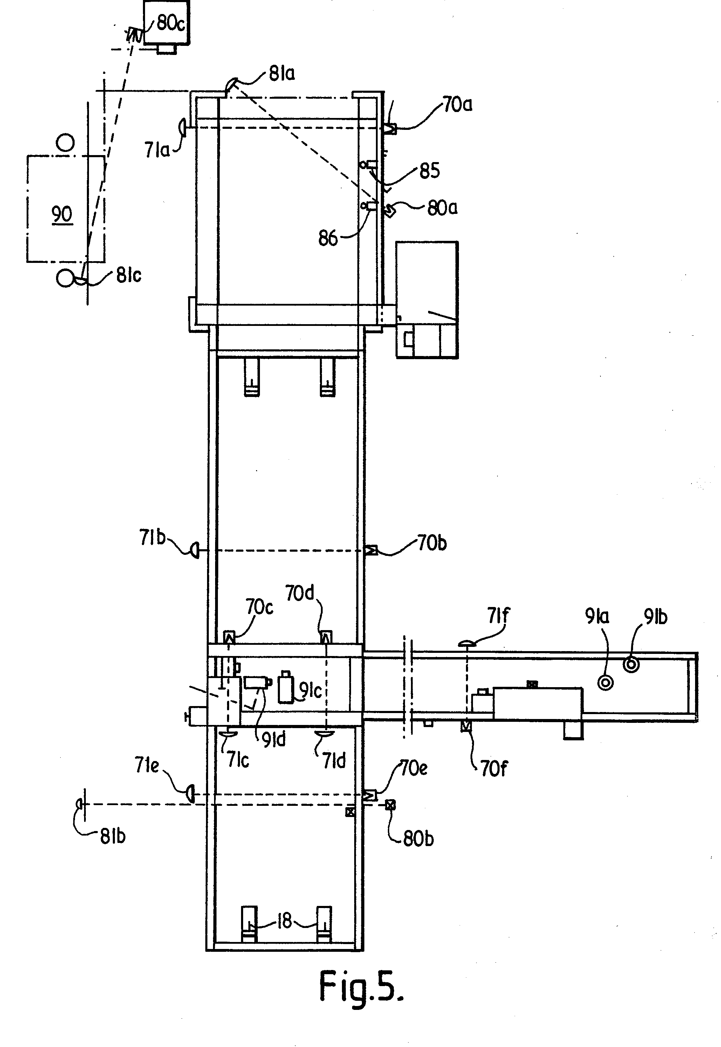

Referring now to Fig. 5, the apparatus of the invention is provided with a number of photo-electric cells and associated reflectors located at various points on the pallet and the keg conveyors. The photo-electric cells have been indicated in Fig. 5 by the reference numerals 70a to 70f and the reflectors by the reference numerals 71a to 71f. The photo-electric cells are utilised to sense the prescence of a keg or a pallet and send a signal to control circuitry to enable synchronisation of the various parts of the apparatus. Additional photo-electric cells 80a to 80e and their associated reflectors 81a to 81e are provided for safety purposes and operate to stop the apparatus if the light path is broken. In addition, a weight sensitive induction loop 90 is provided at the access point for the forklift truck so as to ensure that the apparatus is automatically disabled when the forklift truck is unloading a stack of filled pallets.

Preferably, the control circuit is in the form of a computer based control unit which receives signals from detectors in the apparatus, such as the cells 70, 80 and limit switches 85, 86 and which controls the operation of the various driver using solenoids 91a to 91d.

Modifications and improvements may be incorporated without departing from the scope of the invention.

8

## CLAIMS

1. Mechanical handling apparatus for palletising objects comprising:

a first feed mechanism for objects to be palletised;

a second feed mechanism for empty pallets;and

a palletising station where said objects are loaded onto said empty pallets;

wherein the movement of said first feed mechanism and said second feed mechanism is synchronised so that the objects are correctly loaded onto said pallets.

2. Apparatus as claimed in claim 1 wherein said first feed mechanism comprises an inclined plane along which the objects may roll towards the palletising station and a feeding device located at the bottom of said plane for feeding objects onto pallets.

3. Apparatus as claimed in claim 2 wherein objects are fed to said first feed mechanism by a cross-feed conveyor.

4. Apparatus as claimed in claim 3 wherein said cross-feed conveyor includes means for turning said objects such that the axes of the objects are horizontal to permit said objects to roll down said plane.

5. Apparatus as claimed in claim 1 wherein said second feed mechanism comprises a conveyor having a plurality of pusher members for engaging an end face of said pallets.

6. Apparatus as claimed in claim 1 and further including stacking means for stacking filled pallets one on top of the other.

7. Apparatus as claimed in claim 6 wherein said stacking means comprises means for lifting said filled pallets through a non-return index mechanism which holds the filled pallets in a raised position to be lifted by a subsequent pallet.

# Fig.1.

Fig.2.

2/4

0094225

Fig.3.

Fig.4.

0094225

Fig.5.